# EUROPEAN PATENT SPECIFICATION

(11) **EP 0 988 213 B1**
(45) Date of publication and mention of the grant of the patent: **21.11.2001**
(21) Application number: 98932277.1
(22) Date of filing: 17.06.1998
(51) Int. Cl.: B62K 5/06, B62K 15/00

(54) **PERSONAL MOBILITY VEHICLE**
INDIVIDUELLES MOBILITÄTSFAHRZEUG
VEHICULE DE MOBILITE PERSONNELLE

(30) Priority: 18.06.1997 GB 9712712
(43) Date of publication of application: 29.03.2000
(73) Proprietor: SUNRISE MEDICAL LIMITED, Wollaston, West Midlands DY8 4PS (GB)
(72) Inventor: GOULD, Royston, Mervyn, Kingswinford, West Midlands DY6 8XT (GB)
(74) Representative: Wardley, Diana Mary
(86) International application number: GB9801771
(87) International publication number: WO9857838

(56) References cited:
- US-A- 4 541 501
- US-A- 4 892 166
- US-A- 5 036 938
- US-A- 5 074 372
- US-A- 5 154 251

## Description

### Description of the Invention

The invention relates to a personal mobility vehicle of the kind generally known as a wheelchair or scooter, and in particular to such vehicles which are powered and separable into front and rear parts.

Personal mobility vehicles of this kind are known in the art, for example as described in patent document US 5,074,372.

According to a first aspect of the present invention there is provided personal mobility vehicle comprising separable front and rear parts, wherein:
the front part has at least one ground engaging wheel rotatably mounted thereon;
the rear part provides a support for a seat, connection means which extend rearwardly from a lower portion, or adjacent a lower portion, of the seat support to rotatably mount a pair of ground engaging wheels, and drive means arranged to drive the ground engaging wheels;
and joining means are provided to join the front and rear parts together;
the connection means comprising a trailing arm arrangement pivotally connected to the rear part supporting an axle on which the ground engaging wheels are mounted and further comprising upwardly inclined linking means between the axle, or adjacent the axle, and an upper portion, or adjacent an upper portion, of the seat support, the linking means comprising two linking elements located to either side of the mid-line of the vehicle.

Preferably the connection means extends rearwardly from a lower portion, or adjacent a lower portion, of the support for the seat.

Each linking element may comprise a rigid member.

In an alternative the trailing arm arrangement is pivotally connected to or adjacent the lower portion of the support for the seat and each linking element comprises a suspension unit.

Each suspension unit may comprise a spring/damper unit.

Embodiments of the invention will now be described, by way of example only, with reference to the accompanying drawings in which:
FIGURE 1 is a side view of a personal mobility vehicle;
FIGURE 2 is a plan view of the personal mobility vehicle of Figure 1;
FIGURE 3 is a side view of a second personal mobility vehicle, and
FIGURE 4 is a plan view of the personal mobility vehicle of Figure 3.

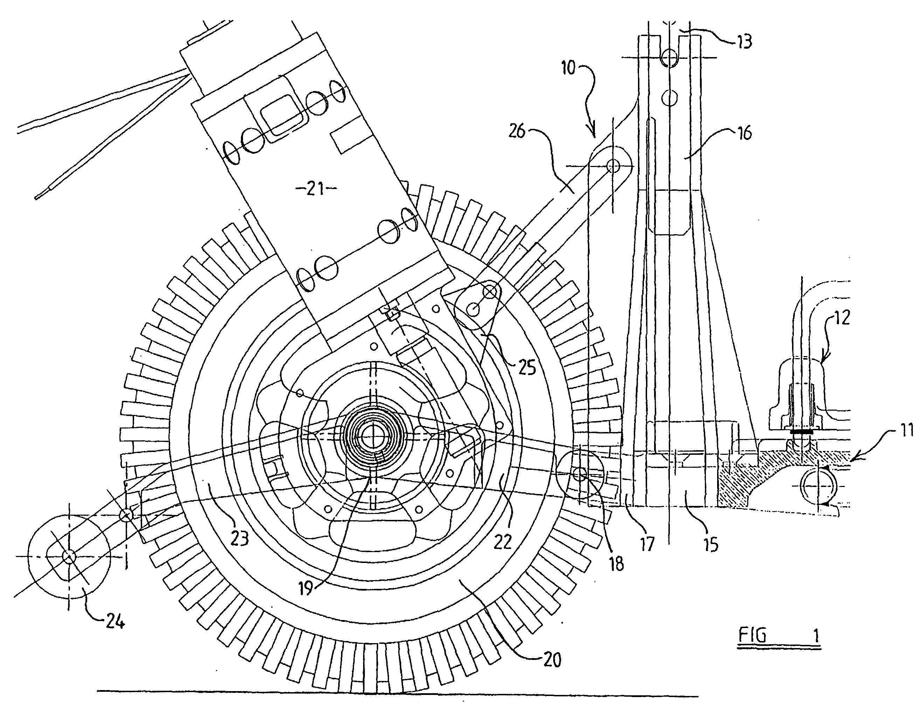

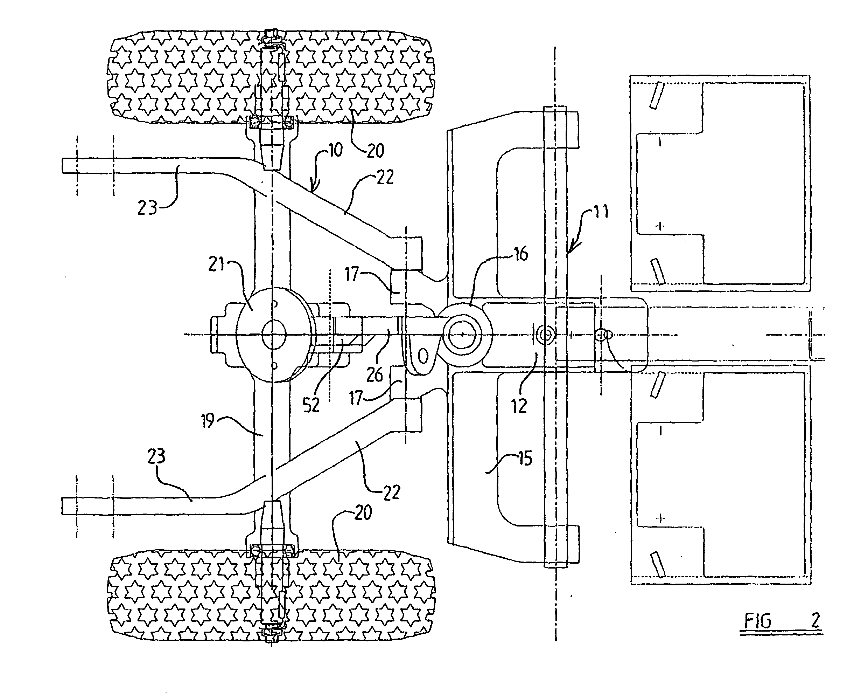

Referring first to Figures 1 and 2 a first personal mobility vehicle will be described.

A rear part 10 of a personal mobility vehicle of the kind commonly called a wheelchair is illustrated, along with a portion of a front part 11 and a portion of joining means 12. As the present invention relates to the rear part 10 of the vehicle only that part of the vehicle will be described further.

The rear part 10 comprises a frame portion 15 and a seat support 16 in the form of a substantially vertical tubular member, which is located on the mid-line of the vehicle, for receipt of a seat stem 13. On a rear part of the seat support 16 a flange 16a is provided. On a rear central portion of the frame part 15 two brackets 17 are provided, to either side of a mid-line of the vehicle, which have substantially horizontal bores therethrough.

The rear part 10 further comprises an axle 19, bearing a pair of rotatable ground engaging wheels 20, and a drive unit 21 drivably connected to the wheels 21 via the axle 19. The axle 19 is mounted on the frame part 15 by means of a trailing arm arrangement comprising forward arms 22 and rearward arms 23. The forward aims 22 have bores at their forward ends, which when aligned with the bores in the brackets 17, allow for insertion of pins 18 and thus connection of the axle 19 to the frame part 15. The rearward arms 23 have castors, or jockey wheels, 24 rotatably mounted at their rearward ends.

The rear part 10 further comprises a flange 25 provided in this case adjacent to a central portion of the axle 19, close to the mid-line of the vehicle. A linking element 26 is connected between the flange 16a and the flange 25 by means of appropriate fastenings (not shown).

The linking element 26 is in this case a rigid member. However, if it is desired to provide rear suspension for the vehicle then the rigid linking member 26 is simply replaced by a suspension unit of appropriate kind, for example a spring/damper unit. Provided, the forward trailing arms 22 are connected to the brackets 17 in a pivotal manner this arrangement provides the required suspension. Hence, a rear part of a vehicle as described above provides the advantage that different models within a product range may readily be provided, with and without rear suspension, with minimal additional parts and cost.

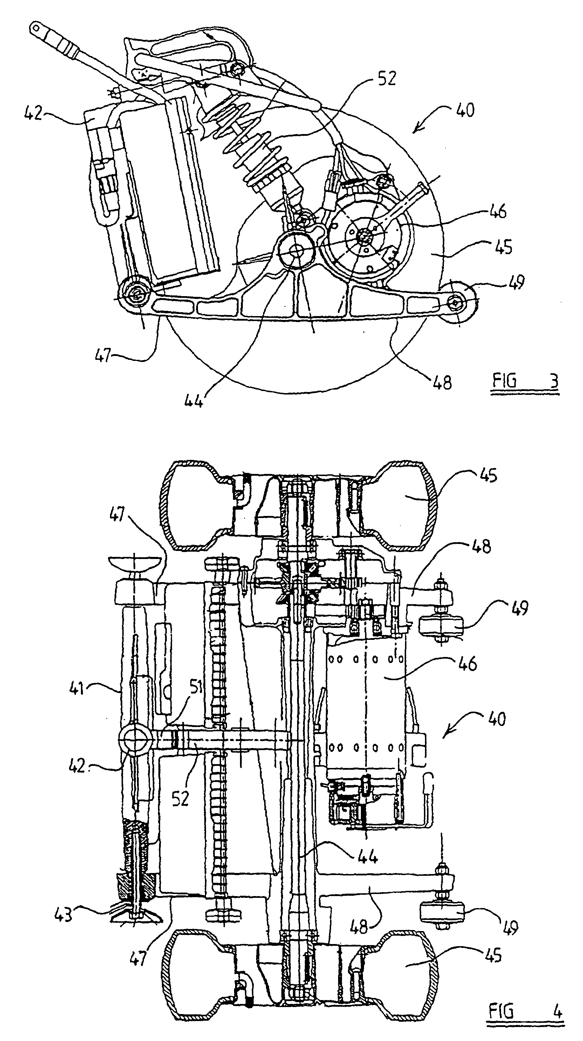

A second personal mobility vehicle will now be described with reference to Figures 3 and 4.

A rear part 40 of a personal mobility vehicle is illustrated, with its forward end to the left and its rear end to the right. The rear part 40 comprises a frame part 41 and a seat support 42, in the form of a generally upright tubular member which is located on the mid-line of the vehicle. The frame part 41 has a bore therethrough from side to side for receipt of a spindle 43, as best shown in Figure 4.

The rear part 40 further comprises an axle 44, bearing a pair of rotatable ground engaging wheels 45, and a drive unit 46 drivably connected to the wheels 45 via the axle 44. The axle 44 is attached to the frame part 41 by means of a trailing arm arrangement comprising forward arms 47 and rearward arms 48. The forward arms 47 have bores at their forward ends through which the spindle 43 is passed to either side of the frame part 41. The rearward arms 48 have castors, or jockey wheels, 49 rotatably mounted at their rearward ends.

The rear part 40 further comprises a flange 50 on or adjacent to the middle of the axle 44 and a flange 51 on or adjacent to an upper portion of the seat support 42. A linking element 52 is attached to the flanges 50 and 51 by means of appropriate fasteners (not shown).

In this case the linking element 52 comprises a suspension unit in the form of a spring/damper unit, hence the rear part 40 described above provides suspension. However, if it is desired not to provide suspension then the suspension unit may be replaced with a rigid member, as described for the rear part 10. Hence, the second embodiment provides the same advantage as described for the first embodiment.

Both of these personal mobitity vehicles have been described incorporating a single linking element in the form of a rigid member or a suspension unit adjacent to the mid-line of the vehicle, according to the present invention they each incorporate two such linking elements, one on either side of the mid-line of the vehicle.

## Claims

1. A personal mobility vehicle comprising separable front and rear parts (11,40), wherein:
(a) the front part (11) has at least one ground engaging wheel rotatably mounted thereon;
(b) the rear part (40) provides a support for a seat (42), connection means (47,48) which extend rearwardly from a lower portion, or adjacent a lower portion, of the seat support (42), to rotatably mount a pair of ground engaging wheels (45), and drive means (46) arranged to drive the ground engaging wheels (45);
and joining means (12) are provided to join the front and rear parts (11,40) together;
**characterised in that** the connection means (47,48) comprise a trailing arm arrangement pivotally connected to the rear part (40) supporting an axle (44) on which the ground engaging wheels (45) are mounted and further comprise upwardly inclined linking means (52) between the axle (44), or adjacent the axle (44), and an upper portion, or adjacent an upper portion, of the seat support (42), the linking means (52) comprising two linking elements located to either side of the mid-line of the vehicle.

2. A personal mobility vehicle according to claim 1 wherein the connection means extends rearwardly from a lower portion, or adjacent a lower portion, of the support for the seat.

3. A personal mobility vehicle according to claim 1 or claim 2 wherein each linking element comprises a rigid member.

4. A personal mobility vehicle according to claim 1 or claim 2 wherein the trailing arm arrangement is pivotally connected to or adjacent the lower portion of the seat support (42) and each linking element comprises a suspension unit.

5. A personal mobility vehicle according to claim 4 wherein each suspension unit (52) comprises a spring/damper unit.

## Patentansprüche

1. Fortbewegungsmittel für Personen mit abnehmbaren vorderen und hinteren Teilen (11, 40), bei dem
(a) das vordere Teil (11) zumindest ein mit dem Boden in Kontakt stehendes Rad aufweist, das drehbar daran befestigt ist,
(b) das hintere Teil (40) eine Stütze für einen Sitz (42), Verbindungsstücke (47, 48), die sich von einem unteren Abschnitt oder benachbart zu einem unteren Abschnitt der Sitzstütze (42) nach hinten erstrecken, um ein Paar mit dem Boden in Kontakt stehender Räder (45) drehbar zu befestigen, und eine Antriebseinrichtung (46) bereitstellt, die zum Antrieb der mit dem Boden in Kontakt stehenden Räder (45) angeordnet ist,
und Befestigungsmittel (12) bereitgestellt sind, um die vorderen und hinteren Teile (11, 40) aneinander zu befestigen,
**dadurch gekennzeichnet, dass** die Verbindungsstücke (47, 48) eine Nachlaufarmanordnung umfassen, die schwenkbar mit dem hinteren Teil (40) verbunden ist und eine Achse (44) abstützt, an der die mit dem Boden in Kontakt stehenden Räder (45) befestigt sind, und ferner ein nach oben geneigtes Verbindungsglied (52) umfassen, das sich zwischen der Achse (44), oder benachbart zur Achse (44), und einem oberen Abschnitt, oder benachbart zu einem oberen Abschnitt, der Sitzstütze (42) befindet, wobei das Verbindungsglied (52) zwei Verbindungselemente umfasst, die sich auf jeder Seite der Mittellinie des Beförderungsmittels befinden.

2. Fortbewegungsmittel für Personen nach Anspruch 1, bei dem sich das Verbindungsstück von einem unteren Abschnitt oder benachbart zu einem unteren Abschnitt der Sitzstütze nach hinten erstreckt.

3. Fortbewegungsmittel für Personen nach Anspruch 1 oder 2, bei dem jedes Verbindungselement ein starres Element umfasst.

4. Fortbewegungsmittel für Personen nach Anspruch 1 oder 2, bei dem die Nachlaufarmanordnung schwenkbar mit oder benachbart zu dem unteren Abschnitt der Sitzstütze (42) verbunden ist und jedes Verbindungselement eine Aufhängungseinheit umfasst.

5. Fortbewegungsmittel für Personen nach Anspruch 4, bei dem jede Aufhängungseinheit (52) eine Feder/Dämpfungs-Einheit umfasst.

## Revendications

1. Véhicule de mobilité personnel comportant des parties avant et arrière (11, 40) pouvant être séparées, dans lequel :
(a) la partie avant (11) comporte au moins une roue montée sur elle de façon: à pouvoir tourner et pouvant reposer sur le sol ;
(b) la partie arrière (40) constitue un support pour un siège (42), des moyens de liaison (47, 48) qui s'étendent vers l'arrière depuis une partie inférieure, ou d'une zone adjacente à une partie inférieure, du support (42) du siège, pour le montage en rotation de deux roues (45) reposant sur le sol, et des moyens d'entraînement (46) agencés de façon à entraîner les roues (45) reposant sur le sol ;
et des moyens de réunion (12) sont prévus pour réunir les parties avant et arrière (11, 40) l'une à l'autre ;
**caractérisé en ce que** les moyens de liaison (47, 48) comprennent un agencement à bras longitudinal relié de façon pivotante à la partie arrière (40) supportant un essieu (44) sur lequel les roues (45) reposant sur le sol sont montées et comprennent en outre des moyens de liaison (52) inclinés vers le haut entre l'essieu (44), ou une zone adjacente à l'essieu (44), et une partie supérieure, ou une zone adjacente à une partie supérieure, du support (42) de siège, les moyens de liaison (52) comprenant deux éléments de liaison placés de chaque côté de l'axe central du véhicule.

2. Véhicule de mobilité personnel selon la revendication 1, dans lequel les moyens de connexion s'étendent vers l'arrière depuis une partie inférieure, ou une zone adjacente à une partie inférieure, du support pour le siège.

3. Véhicule de mobilité personnel selon la revendication 1, ou la revendication 2, dans lequel chaque élément de liaison comprend un élément rigide.

4. Véhiculé de mobilité personnel selon la revendication 1 ou la revendication 2, dans lequel l'agencement de bras longitudinal est relié de façon pivotante à ou à proximité immédiate de la partie inférieure du support (42) de siège et chaque élément de liaison comprend un bloc de suspension.

5. Véhicule de mobilité personnel selon la revendication 4, dans lequel chaque bloc de suspension (52) comprend un bloc à ressort/amortisseur.
